Europäisches Patentamt

European Patent Office

Office européen des brevets

(19)

(11) **EP 1 238 533 B1**

(12) **EUROPEAN PATENT SPECIFICATION**

(45) Date of publication and mention
of the grant of the patent:
**02.06.2004  Bulletin 2004/23**

(51) Int Cl.[7]: **H04N 5/217**
// H04N5:21

(21) Application number: **00981172.0**

(22) Date of filing: **06.12.2000**

(86) International application number:
**PCT/DK2000/000669**

(87) International publication number:
**WO 2001/043426 (14.06.2001 Gazette 2001/24)**

(54) **APPARATUS AND METHOD FOR REDUCTION OF MOIRE EFFECTS**

VORRICHTUNG UND VERFAHREN ZUR VERMINDERUNG VON MOIRE

APPAREIL ET PROCEDE DE REDUCTION DES EFFETS DE MOIRE

(84) Designated Contracting States:
**AT BE CH CY DE DK ES FI FR GB GR IE IT LI LU
MC NL PT SE TR**

(30) Priority: **06.12.1999  US 455723**

(43) Date of publication of application:
**11.09.2002  Bulletin 2002/37**

(73) Proprietor: **Phase One A/S
2000 Frederiksberg (DK)**

(72) Inventor: **KNUDSEN, Niels, V.
DK-2900 Hellerup (DK)**

(74) Representative: **Frederiksen, Jakob Pade et al
Plougmann & Vingtoft A/S,
Sundkrogsgade 9,
P.O. Box 831
2100 Copenhagen O (DK)**

(56) References cited:
**US-A- 5 510 835          US-A- 5 614 947
US-A- 5 915 047          US-A- 5 969 757**

**Description**

The present invention relates to an apparatus and a method for recording images. The invention relates in particular to an apparatus and a method for recording images by forming an image of an object on an array of light-sensitive detector elements. The invention provides a method for reducing Moiré effects in the recorded image with minimum loss of resolution.

It is well known to represent an image digitally by dividing the image into a large number of segments, denoted pixels, and allocating digital values, denoted pixel values, to each pixel. Typically, the image is divided into a matrix of rows and columns of pixels and the size of a digital image is then given by the number of pixels in a row and the number of pixels in a column. The pixel values are typically stored in an array in a digital memory.

For example, a grey tone image may be represented digitally by a digital image comprising pixels each of which has one pixel value representing the grey tone of the corresponding pixel. Similarly, a color image may be represented by a digital image comprising pixels each of which have three pixel values, one for each of the colors red, green, and blue.

Typically, a digital image is created by transmission of light towards an object and detection by an electronic camera of light reflected from or transmitted through the object. However, in general a digital image may be created by transmission of any kind of radiated energy, such as electromagnetic radiation, such as visible light, infrared radiation, ultraviolet radiation, X-rays, radio waves, etc, ultrasound energy, particle energy, such as electrons, neutrons, etc, etc, towards an object for interaction with the object and by detection of energy having interacted with the object, such as by reflection, refraction, absorption, etc.

A digital image may be formed by any imaging system, such as radiometer systems, infrared systems, radar systems, ultrasound systems, X-ray systems, electronic cameras, digital scanners, etc, adapted to detect the kind of energy in question and to generate a digital image based on the energy detection.

The amount of energy needed to record a digital image with a desired signal to noise ratio, i.e. the sensitivity of the imaging system, is determined by the noise level in the imaging system. Energy detectors of any kind generate noise that adds to the signal desired to be recorded. The signal to noise level of a digital image is typically required to be comparable to if not better than the signal to noise level of an image recorded on a photographic film for subsequent reproduction in professional publications.

Typically, an image recording system operating in the visible light range of electromagnetic radiation, such as an electronic camera, a digital camera, an electronic scanner, a digital scanner, etc, uses a solid state imaging device, typically a charge coupled device (CCD), for recording of an image.

The CCD is an array of a large number of light sensitive detectors connected to each other as an analogue shift register. In each detector of the CCD a charge is formed that is proportional to the light energy incident on the detector during an integration period. The analogue charge of each detector is shifted serially out of the CCD and is typically converted to a digital value whereby a digital representation of the recorded image is formed. Each pixel value of the digital image is equal to the digitized charge of the corresponding CCD detector. The pixel values may be transferred to an external computer through a computer interface or may be stored on a memory card or on a rotating magnetic recording medium.

In the present context, the term exposure is to be understood in a broad sense as the time period during which an energy sensor is actually sensing the energy. For example, a photographic film is exposed to light whenever light is incident upon it, while a CCD is exposed to light when the pixel elements of the CCD are allowed to integrate light incident upon them. The CCD is not exposed when its light sensing pixel elements are short-circuited although light may be incident upon them.

It is known in the art to use linear CCDs in an image recording system in which the linear CCDs light-sensing detectors are arranged in a single line. Typically, the array is moved across the image, scanning it one line at a time. For color images, filters can be placed in front of the array, which then makes three passes across the image during image recording.

Offering a good compromise of image resolution (high pixel count) and cost in an image recording system is the tri-linear CCD array, which comprises three linear CCDs positioned side by side. Each line is covered by its own color filter. The array makes a single pass across the image, and each linear CCD records a line at a time.

At a higher cost, a two-dimensional CCD array can capture the entire image in a very short time. Three separate exposures with three color filters can be used to make a color representation. For example, the color filters can be placed in a rotating wheel that sequentially inserts each color filter in the optical path between the image forming optics of the image recording system and the two-dimensional CCD array.

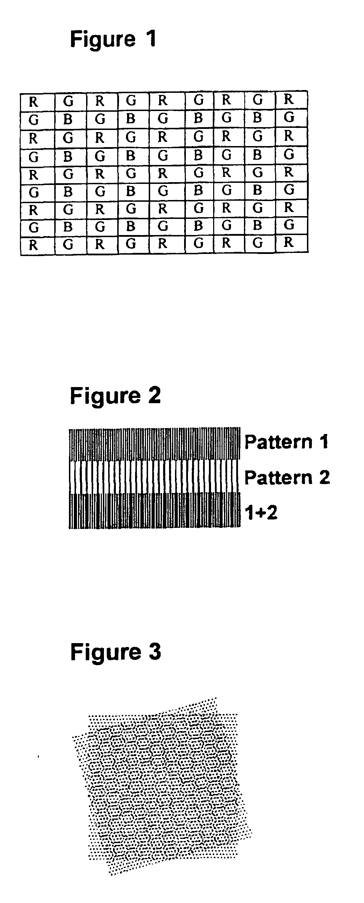

Alternatively, a color filter mask may be overlaid the CCD array whereby each light sensitive pixel element in the CCD-array is covered with a color filter for picking passing radiation within a specific spectral range corresponding to a specific primary color as shown in Figure 1 (Red, R, Green, G, Blue, B). The color filter mask allows a color image to be recorded in a single exposure at the expense of resolution.

When using a CCD with a color filter mask, various methods for recording a high-resolution image exist:

- The CCD array with the color filter mask can be shifted laterally (an integer number of pixels) relative to the image so as to record color information relating to three primary colors at each pixel of the image (US-A-5,877,807). As mentioned, this procedure needs three exposures, one for each position of the CCD array.

- A color that is not recorded at a specific pixel may be estimated utilizing various interpolation algorithms. An example of such color interpolation method is given in US-A-5,373,233.

It is well known that digital images of objects having some repetitive regular structures may be distorted due to Moiré effects.
The Moiré effect is created by interference between two or more regular structures, e.g. with different spatial frequencies as shown in Fig. 2. Two linear patterns 1 and 2 with different spatial frequencies are shown and when superposed frequency beating 1 + 2 is generated. Likewise, a Moiré effect may be generated when two patterns are rotated or translated with respect to each other as shown in Fig. 3. Patterns in color may create colored frequency beating.
An intuitive expression for the Moiré beat frequency is given by:

$$\nu_{beat} = ABS\left[\nu_1 - \nu_2\right] \qquad (1)$$

where $\nu_{beat}$ is the Moiré beat frequency and $\nu_{1,2}$ is the frequency of the patterns 1 and 2. Alternatively the $\nu$'s can designate resolutions, in e.g. DPI, instead of frequencies.
When recording images using an image recording system that images an object onto a two-dimensional sensor-array, e.g. a CCD array, a first pattern is inherent in the recording system, since the matrix of sensor elements forms such a pattern. Therefore, the recording of a digital image of any object having some repetitive structure may produce an image showing Moiré effects.
Various methods for reducing Moiré effects are known:

1. Using a quasi-periodic patterned CCD, in which the pixel elements do not form a regular matrix rather they form an irregular pattern of elements with varying distances between them. The irregular matrix has no definite spatial frequency, and hence no interference with a spatial frequency in the image may occur (US-A-4,894,726).

2. Optical blurring for distorting an object pattern in the formed image, e.g. by inserting hazy glass in front of the image. The idea of aggravating image resolution in order to corrupt the spatial frequency producing Moiré effects is also utilized in the next two methods.

3. Optical low-pass filters may cause incident light to propagate along different paths for different colors. Thereby any patterning in the formed image are "color-separated", hence the color resolution is reduced thereby reducing Moiré effects (US-A-5,237,446).

4. By optical methods disclosed in US-A-5,969,757, US-A-4,607,287 or US-A-4,998,164, the spatial frequency of the recording device is corrupted by swinging or wobbling the CCD array.

It is a disadvantage of method 2, 3 and 4 for suppression of Moiré effects that the recorded image resolution is decreased.
It is a further disadvantage of method 2 and 3 that an extra optical element is inserted in the beam path to corrupt or filter the spatial frequency in the image causing attenuation of recorded light intensity.
It is a still further disadvantage of method 1 that cost expensive non-standard CCD arrays comprising irregular shaped sensor elements are needed.
It is a still further disadvantage of method 4 that the displacement is one-dimensional so that only one of the two spatial frequencies of the CCD array are efficiently removed.
It is an object of the present invention to provide an image recording system comprising a driving sensor device for reducing Moiré effects and standard color filter mask CCD arrays.
It is still further object of the present invention to provide an image recording system comprising a driving sensor device for reducing Moiré effects with a minimum reduction of resolution.

According to a first aspect of the present invention the above-mentioned objects are fulfilled by an apparatus for recording an image of an object, as set out in claim 1.

According to a second aspect of the present invention the above-mentioned objects are fulfilled by a method of recording an image of an object, as set out in claim 13.

Typically, the apparatus is operating in the visible light range of electromagnetic radiation and may be an electronic camera, a digital camera, an electronic scanner, a digital scanner, etc.

The image sensor is preferably a solid state imaging device, such as a charge coupled device (CCD), a CMOS based image sensor array, etc.

The movement of the image sensor in relation to the image may be performed by keeping the image in a fixed position and moving the image sensor, or, by keeping the image sensor in a fixed position and moving the image, or, by combining movement of the image and the image sensor.

The image may be moved by moving the optical path of light forming the image. For example, the image forming means typically comprises a lens. The moving means may be adapted to tilt the lens whereby the optical axis and the image formed by the lens is moved. Alternatively, the light path of the image forming means may be folded by a mirror and the moving means may be adapted to rotate the mirror whereby the light path of the image forming means is moved.

The moving means may comprise various types of actuators, such as piezo electric crystals, the displacement of which is controlled by applying a specific electric voltage to their electrodes, electro motors generating linear or rotational displacements, galvanometers, magnetically activated or controlled actuators, pneumatic actuators, hydraulic actuators, etc.

For simplicity, the movement is described below for an embodiment of the invention in which the image is kept in a fixed position and the image sensor is moved. However, it is evident that for suppression of Moiré effects it does not matter whether the image or the image sensor moves or both move. It is also evident that any movement of the image sensor in relation to the image may be interpreted as a movement of the image sensor in relation to a fixed image.

Any movement of a rigid body may be decomposed into a translational movement, in which every point of the moving object has simultaneously the same velocity and direction of motion, and a rotational movement. The translational movement may be three-dimensional and the rotational movement may be superpositioned of rotations around three different axes of rotation, e.g. three axes that are orthogonal to each other. Thus, any movement of the image sensor may be defined by three movement components defining a three-dimensional translational movement and three movement components defining rotation around three axes of rotation.

For example, a user of the apparatus may select a movement to be composed of any combination of the six movement components described above. The movement may be an oscillating movement, i.e. displacement values of a specific movement component varies as a periodic function of time. The user may select various parameters of the periodic time function, such as a curve form of the periodic time function, an amplitude of the periodic function, a frequency of the periodic function, a phase difference between two periodic functions, etc.

For example, the image sensor may be mounted on an actuator so that it is movable in one dimension and the moving means may be adapted to move the image sensor back and forth in a reciprocating movement with a fixed frequency. The amplitude of the movement is adjusted by the operator of the apparatus. Typically, an image is recorded with the amplitude set to zero. If the recorded image comprises Moiré effects, the operator gradually increases the amplitude until the Moiré effects disappear. In this way, Moiré effects may be suppressed with a minimum decrease in spatial resolution of the image.

Further, the movement may be composed of movement components that lead to suppression of Moiré effects with a minimum amplitude. For example, if Moiré effects generate a linear Moiré pattern in the recorded image, it is preferred to move the image sensor in relation to the image translationally perpendicular to the lines of the Moiré pattern. Further, a rotational movement may be selected in order to suppress substantially linear Moiré patterns, and a translational movement may be selected in order to suppress substantially circular Moiré patterns.

The moving means may be connected to user interface means allowing the user of the apparatus to make the above-mentioned selections in a manner that is well-known in the art of computerized equipment. Further, the moving means may be connected to image processing means that is adapted to analyze the recorded image and detect Moiré effects. Based on detection of Moiré effects the control means may adjust the movement, e.g. increase an amplitude of displacements of a specific movement component, for recording of a new image. The control means generate the control signals that are required to control the moving means in response to manual and automatic movement component selections. For example, when the moving means comprises a piezo electric crystal, the control means generate the voltage applied to the electrodes of the crystal. Thereby, the characteristic parameters of the movement component corresponding to the piezo electric crystal can be controlled by controlling the voltage signal to the crystal. Changing e.g. the phase shift between voltage signals supplied to two piezoelectric actuators, will change the phase shift between the movement components controlled by these actuators.

Figure 1 shows a CCD array with a color filter mask of the type Bayer 2G. Each cell in the array represents a pixel on the m x n array CCD where m is the number of pixels in each row on the CCD and n is the number of rows on the CCD. R designates pixels covered with red filters (called Red pixels), G designates pixels covered with green filter material (Green pixels) and B designates pixels covered with blue filter material (Blue pixels).

Fig 2 shows a pattern 1 and a pattern 2, which are superimposed to give a pattern 1 + 2 exhibiting Moiré effects.

Figure 3 shows, in analogy with Figure 2, two patterns, which are superimposed to show Moiré effects.

Figure 4 is a plot of two preferred displacement components of the movement of the image in relation to the image sensor.

Figure 5 shows various movements of the image in relation to the image sensor, each movement being defined by the direction, amplitude, frequency and phase shifts of the movement component functions of Figure 4.

Figure 6 schematically illustrates an embodiment of the invention with a CCD array attached to two actuators.

Figure 7 schematically illustrates another embodiment of the invention with a CCD array attached to one actuator.

Figure 8 schematically illustrates an electric circuit of the device driver used in the embodiments in Figure 6 and 7.

Figure 9 illustrates control signals of an embodiment of the invention.

Figure 10 shows an image formation system.

The present invention provides an image recording system comprising means for reducing Moiré effects. The system comprises means for forming an image of the object, such as a camera lens, onto a image sensor array for recording of the image. The image sensor array is an array of light sensitive elements.

The means for reducing Moiré effects comprises means for moving the formed image in relation to the image sensor. This movement is preferably oscillatory. The effect of the movements is to distribute different photons emitted from a specific point in the image into different light sensitive elements of the image sensor. Thereby Moiré effects created by interference between a structure in the object and the image sensor array will be reduced, since the spatial frequency content of the image sensor array is broadened.

This method of oscillating the image in relation to the image sensor is counter intuitive, since the design of image recording systems typically include efforts of stabilizing the image sensor against vibrations and shocks.

As already mentioned, the movement can be adjusted by adjusting characterizing parameters of movement components. According to the present invention, at least one of the characterizing parameters of at least one movement component is controllable so that the movement can be adjusted. Preferably, several characterizing parameters of several movement components are controllable.

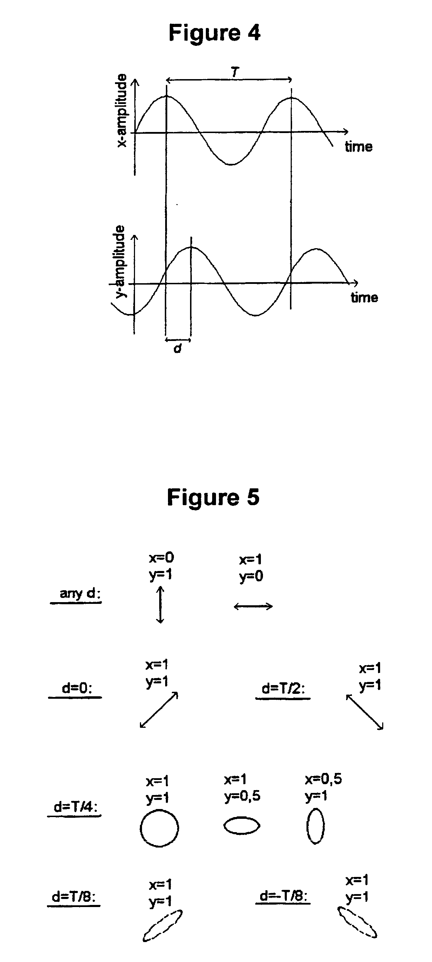

Figure 4 shows the time dependence of two translational components. These two components define a possible movement pattern of the image in relation to the image sensor. The upper function is the translation in an x-direction (e.g. the direction parallel to the width of the image sensor array) as a function of time, the lower function is the translation in a y-direction (e.g. the direction parallel to the height of the image sensor array). Both functions are sine functions and has a period $T$ corresponding to a frequency $f=1/T$. In this example the frequency is the same for the two components. The two functions are further characterized by their relative phase shift $d$ and their amplitudes in either the x- or y-direction, denoted x and y. Referring now to Figure 5, the relative amplitudes and the phase shift is used to describe a movement of the image in relation to the image sensor. It should be noted that different combinations of phase shift and amplitudes allows for a large variety of movement patterns. The shown patterns constitute a small selection of the numerous possible movements and do not indicate any preferred movement according to the present invention.

Depending on the Moiré causing feature in the object to be recorded, as well as on the shape and sizes of the image sensor elements, some movements may be better suited than others in reducing Moiré effects with minimum reduction of resolution.

In some cases only small movements are needed in order to reduce Moiré effects. Even very small motions in a specific pattern can remove effects that would otherwise need large amplitude displacements if performed along a given direction. In known systems the movement can not be adjusted and this may lead to an unnecessary reduction of image resolution. According to the present invention, an optimal movement that reduces Moiré effects with minimum reduction of resolution may be selected either automatically or by the user. Further, when adjusting the movement, the reduction of resolution can be quantitatively controlled. This also allows the user to make a compromise between reduction of resolution and Moiré effects.

It is important to point out that a single translation or rotation during the recording of the image may be sufficient to reduce Moiré effects, however the optimal movement depends on the specific recording situation, object, image sensor array etc.

When choosing the movement of the image in relation to the image sensor, it is typically important that the movement is performed non-parallel with any directions defined by a structure of the image sensor array.

If the amplitude of a translation component is much less than a width of an image sensor element, only photons emitted by a part of the image points will be distributed into different elements, thereby the reduction of resolution in the resulting recorded image will be insignificant. Increasing the amplitude increases the part of image points from which photons will be distributed into different elements and also the loss of resolution. The amplitude may be increased until all photons from all image points are distributed into at least two different elements. This will happen when the amplitude of the translation component is equal to half the width of elements along the direction of the movement component.

Similar considerations can be made in relation to the amplitude of rotational components, these however, are more complicated since the displacement of an element depends on its distance from the axis of rotation.

The movement of the image in relation to the image sensor can be performed in several ways. Three preferred ways are given below:

- translating and/or rotating the image sensor array,
- translating and/or rotating the image forming means, such as a lens,
- translating and/or rotating a reflective device, such as a mirror, which reflects the formed image onto the image sensor.

The movements may be carried out using one or more actuators in contact with the component (such as the image sensor, a lens or a mirror) to perform a movement as specified above.

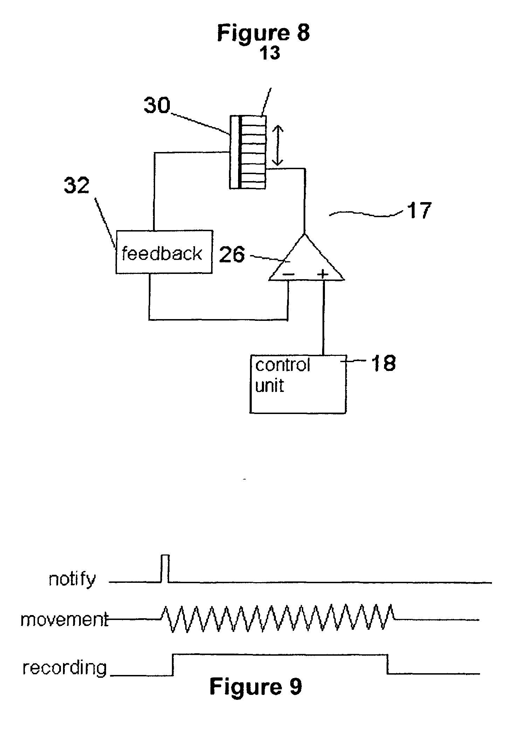

In some preferred embodiments to be described in the following, it is the image sensor that is translated in relation to the formed image and a housing. In this embodiment, the actuator is a piezoelectric element in contact with the image sensor and the housing. Piezoelectric elements can be stacked in order to generate a larger maximum amplitude of the translation (see 13 in Figure 8). The description of this embodiment covers the principles and techniques used in other embodiments, where the image forming means or a deflective member is translated or rotated, or where the actuator comprises an electro motor.

The image sensor may be a CCD array or a CMOS based image sensor array, preferably with a color filter mask as shown in Figure 1 (each element in the array represents a sensor element of the CCD array, letters R, G and B designate that a sensor element is covered with a color filter material corresponding to the colors Red, Green and Blue, respectively).

The means for forming the image is typically mounted in a housing. In a typical configuration, the image will be formed in an image plane parallel to the CCD array. Optionally, a mirror is positioned between the image forming means and the CCD array so that it reflects the projected image onto the CCD array.

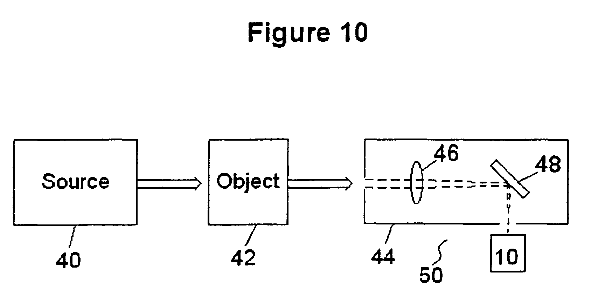

As shown in Figure 10, an image formation system 50 is typically mounted in a housing 44. The image formation system 50 may be of any configuration. The image formation system shown in Figure 10 includes a lens 46 and a deflecting element, such as a mirror 48. The image formation system 50 receives radiation output by a source 40 which has interacted with an object 42. The exact positioning of the source 40, the object 42 and the image formation system 50 depends on the source used, the type of interaction with the object to be imaged and the exact configuration of the image formation system 50. In a typical configuration, the image will be formed in an image plane parallel to the CCD array 10, thus only requiring the use of the lens 46. Optionally, a mirror 48 is positioned between the object 42 and the CCD array 10 to deflect the projected image onto the CCD array 10.

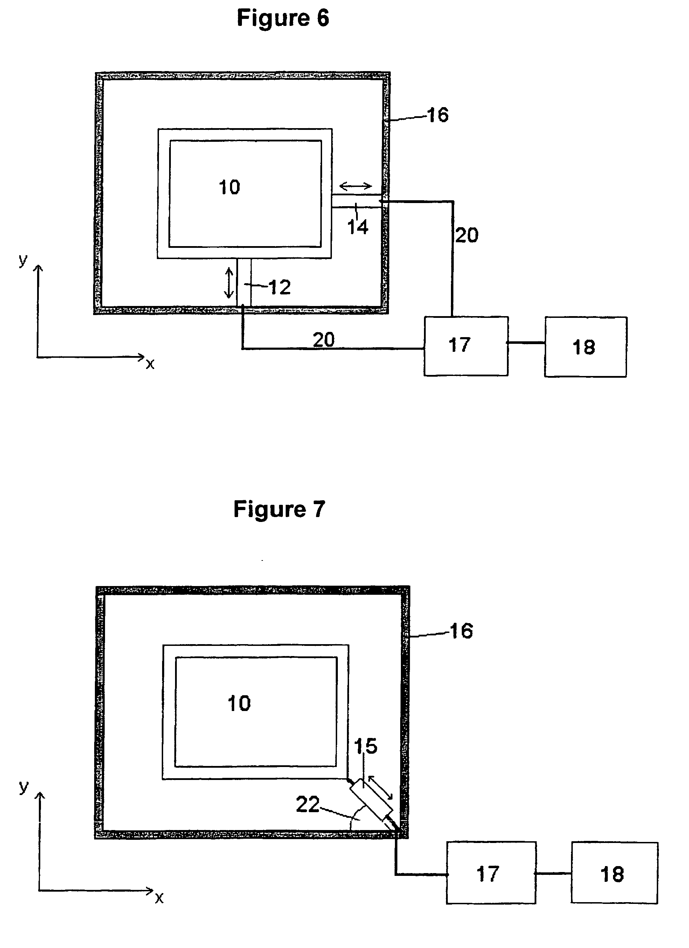

In a first embodiment shown in Figure 6, the CCD array is positioned in a housing 16 with two piezoelectric elements 12 and 14 establishing contact between the housing and the CCD array. One element 12 is adapted to induce movements in the vertical y-direction, and the other element 14 is adapted to induce movements in the horizontal x-direction. Both elements are connected through wires 20 to a device driver 17 and a control unit 18. The control unit 18 controls the characterizing parameters such as start/stop-time and amplitude, frequency and phase shift of each of the translation components. When alternating voltage is applied to the piezoelectric elements, the CCD array will perform a movement pattern in the image plane, as illustrated by the examples in Figures 4 and 5. The device driver consist of electronic circuits for supplying voltage to the actuators, the control unit will preferably be a microprocessor but may be any voltage supply unit.

In a second embodiment shown in Figure 7, the CCD array 10 is positioned in a housing 16 with a single piezoelectric element 15 establishing contact between the housing and the CCD array. The element 15 is positioned to induce movements of the CCD array in a direction forming an angle 22 in relation to the x-direction. Again, the element is wired to a device driver 17 and a control unit 18, typically a microprocessor.

Figure 8 shows a possible implementation of the device driver 17 to a stack 13 of piezo elements. When a first voltage is applied to the piezo stack 13 from the control unit 18, a strain gauge 30 detects the movement of the piezo stack, and controls the amplitude through the feedback controller 32 and the operational amplifier 26. The strain gauge might as well detect the movement of the recording device.

Some steps in a typical recording procedure are illustrated in Figure 9. The user activates the recording device whereby e.g. an electric pulse notifies the control unit 18. In response, the control unit starts the movement of the CCD by applying a variable voltage to the piezo stack 13. After the movement of the CCD has set in, the recording is started. The recording is terminated while the CCD is still moving. The movement has to take place during the recording, but the temporal overlap need not to be complete as in Figure 9.

The recording system according to the present invention can be used in a variety of applications, such as digital cameras, digital film cameras such as digital video cameras, digital still cameras and cameras or detectors in general.

**Claims**

1. An apparatus for recording an image of an object, comprising

   - an image sensor (10) comprising an array of light sensitive elements,

   - image forming means (50) for forming the image at the image sensor (10),

   - moving means (12, 14, 15) for movement of the image sensor (10) in relation to the image during recording of the image, and

   - control means (17) for selectable control of the movement of the image sensor (10) in relation to the image, the movement being selected from a plurality of different movements depending on a Moiré causing feature in the object to be imaged.

2. An apparatus according to claim 1, wherein the control means (17) comprises means for controlling an amplitude of the movement.

3. An apparatus according to claim 1 or 2, wherein the control means (17) comprises means for controlling a frequency of the movement.

4. An apparatus according to any of claims 1-3, wherein the movement is a one-dimensional movement.

5. An apparatus according to any of claims 1-3, wherein the movement is a two-dimensional movement.

6. An apparatus according to any of the preceding claims, wherein the image forming means (50) comprises a movable part (46, 48) for provision of the movement.

7. An apparatus according to claim 6, wherein the image forming means (50) comprises a piezo-electric actuator for moving the movable part.

8. An apparatus according to claim 6 or 7, wherein the movable part is a defective member (48) for deflecting light forming the image.

9. An apparatus according to any of the preceding claims, wherein the image sensor (10) comprises light sensitive elements positioned in a two-dimensional matrix.

10. An apparatus according to claim 9, wherein the light sensitive elements of the image sensor (10) are at least partly covered by a color filter mask.

11. An apparatus according to any of the preceding claims, wherein the image sensor (10) is movable.

12. An apparatus according to claim 11, wherein the movement of the image sensor is parallel to the image plane of the object.

13. A method of recording an image of an object, comprising the steps of

   - forming the image on an image sensor (10) comprising an array of light sensitive elements with image forming means,

- moving the image sensor in relation to the image during recording of the image,

- selecting a desired movement from a plurality of different movements depending on a Moiré causing feature in the object to be imaged, and

- controlling the movement of the image sensor in relation to the image in accordance with the selection.

**14.** A method according to claim 13, wherein the step of selecting comprises the step of selecting a desired amplitude of the movement.

**15.** A method according to claim 13 or 14, wherein the step of selecting comprises the step of selecting a desired frequency of the movement.

**16.** A method according to any of claims 13-15, wherein the movement is a one dimensional movement.

**17.** A method according to any of claims 13-15, wherein the movement is a two-dimensional movement.

**18.** A method according to any of claims 13-17, wherein the step of moving comprises the step of moving a movable part (46, 48) of the image forming means (50).

**19.** A method according to any of claims 13-17, wherein the step of moving comprises the step of moving the image sensor (10).

**Patentansprüche**

**1.** Vorrichtung zur Aufzeichnung eines Bildes eines Objektes, mit

- einem Bildsensor (10) mit einer Gruppe von lichtempfindlichen Elementen,
- einer Bilderzeugungseinrichtung (50) zur Bildung des Bildes am Bildsensor (10),
- einer Bewegungseinrichtung (12, 14, 15) zur Bewegung des Bildsensors (10) gegenüber dem Bild während der Aufzeichnung des Bildes, und
- einer Steuerungseinrichtung (17) zur selektiven Steuerung der Bewegung des Bildsensors (10) gegenüber dem Bild, wobei die Bewegung aus einer Mehrzahl von unterschiedlichen Bewegungen in Abhängigkeit von einem Moire verursachenden Merkmal im abzubildenden Objekt ausgewählt ist.

**2.** Vorrichtung nach Anspruch 1, bei welcher die Steuerungseinrichtung (17) Mittel zur Steuerung einer Amplitude der Bewegung aufweist.

**3.** Vorrichtung nach Anspruch 1 oder 2, bei welcher die Steuerungseinrichtung (17) Mittel zur Steuerung einer Frequenz der Bewegung aufweist.

**4.** Vorrichtung nach einem der Ansprüche 1 bis 3, bei welcher die Bewegung eine eindimensionale Bewegung ist.

**5.** Vorrichtung nach einem der Ansprüche 1 bis 3, bei welche die Bewegung eine zweidimensionale Bewegung ist.

**6.** Vorrichtung nach einem der vorangegangenen Ansprüche, bei welcher die Bilderzeugungseinrichtung (50) ein bewegliches Teil (46, 48) zur Erzeugung der Bewegung aufweist.

**7.** Vorrichtung nach Anspruch 6, bei welcher die Bilderzeugungseinrichtung (50) ein piezo elektrisches Betätigungselement zur Bewegung des beweglichen Teils aufweist.

**8.** Vorrichtung nach Anspruch 6 oder 7, bei welcher das bewegliche Teil ein Ablenkelement (48) zur Ablenkung von das Bild erzeugendem Licht ist.

**9.** Vorrichtung nach einem der vorangegangenen Ansprüche, bei welcher der Bildsensor (10) lichtempfindliche Elemente aufweist, die in einer zweidimensionalen Matrix angeordnet sind.

**EP 1 238 533 B1**

10. Vorrichtung nach Anspruch 9, bei welcher die lichtempfindlichen Elemente des Bildsensors (10) mindestens teilweise von einer Farbfiltermaske bedeckt sind.

11. Vorrichtung nach einem der vorangegangenen Ansprüche, bei welcher der Bildsensor (10) beweglich ist.

12. Vorrichtung nach Anspruch 11, bei welcher die Bewegung des Bildsensors parallel zur Bildebene des Objektes stattfindet.

13. Verfahren zur Aufzeichnung eines Bildes eines Objektes, mit den Schritten,

    - das Bild auf einem Bildsensor (10), der eine Gruppe von lichtempfindlichen Elementen aufweist, mit einer Bilderzeugungseinrichtung zu bilden,
    - den Bildsensor gegenüber dem Bild während der Aufzeichnung des Bildes zu bewegen,
    - eine gewünschte Bewegung aus einer Vielzahl von unterschiedlichen Bewegungen in Abhängigkeit von einem Moire verursachenden Merkmal im abzubildenden Objekt auszuwählen, und
    - die Bewegung des Bildsensors gegenüber dem Bild gemäß der Auswahl zu steuern.

14. Verfahren nach Anspruch 13, bei welchem der Auswahlschritt den Schritt aufweist, eine gewünschte Amplitude der Bewegung auszuwählen.

15. Verfahren nach Anspruch 13 oder 14, bei welchem der Auswahlschritt den Schritt aufweist, eine gewünschte Frequenz der Bewegung auszuwählen.

16. Verfahren nach einem der Ansprüche 13 bis 15, bei welchem die Bewegung eine eindimensionale Bewegung ist.

17. Verfahren nach einem der Ansprüche 13 bis 15, bei welchem die Bewegung eine zweidimensionale Bewegung ist.

18. Verfahren nach einem der Ansprüche 13 bis 17, bei welchem der Bewegungsschritt den Schritt aufweist, ein bewegliches Teil (46, 48) der Bilderzeugungseinrichtung (50) zu bewegen.

19. Verfahren nach einem der Ansprüche 13 bis 17, bei welchem der Bewegungsschritt den Schritt aufweist, den Bildsensor (10) zu bewegen.


**Revendications**

1. Appareil pour enregistrer une image d'un objet, comprenant :

    - un capteur d'image (10) comprenant un ensemble d'éléments sensibles à la lumière,
    - un moyen de formation d'image (50) pour former l'image au niveau du capteur d'image (10),
    - des moyens de déplacement (12, 14, 15) pour déplacer le capteur d'image (10) par rapport à l'image pendant l'enregistrement de l'image, et
    - un moyen de contrôle (17) pour contrôler de façon sélective le déplacement du capteur d'image (10) par rapport à l'image, le déplacement étant sélectionné à partir d'une pluralité de déplacements différents en fonction d'une caractéristique causant un Moiré dans l'objet à imager.

2. Appareil selon la revendication 1, dans lequel le moyen de contrôle (17) comprend un moyen destiné à contrôler une amplitude du déplacement.

3. Appareil selon la revendication 1 ou 2, dans lequel le moyen de contrôle (17) comprend un moyen destiné à contrôler une fréquence du déplacement.

4. Appareil selon l'une quelconque des revendications 1 à 3, dans lequel le déplacement est un déplacement unidimensionnel.

5. Appareil selon l'une quelconque des revendications 1 à 3, dans lequel le déplacement est un déplacement bidimensionnel.

**6.** Appareil selon l'une quelconque des revendications précédentes, dans lequel le moyen de formation d'image (50) comprend une partie mobile (46, 48) pour la création du déplacement.

**7.** Appareil selon la revendication 6, dans lequel le moyen de formation d'image (50) comprend un actionneur piézoélectrique pour déplacer la partie mobile.

**8.** Appareil selon la revendication 6 ou 7, dans lequel la partie mobile est un élément de déviation (48) destiné à dévier la lumière formant l'image.

**9.** Appareil selon l'une quelconque des revendications précédentes, dans lequel le capteur d'image (10) comprend des éléments sensibles à la lumière positionnés dans une matrice bidimensionnelle.

**10.** Appareil selon la revendication 9, dans lequel les éléments sensibles à la lumière du capteur d'image (10) sont au moins en partie recouverts d'un masque filtrant coloré.

**11.** Appareil selon l'une quelconque des revendications précédentes, dans lequel le capteur d'image (10) est mobile.

**12.** Appareil selon l'une quelconque des revendications précédentes, dans lequel le capteur d'image est parallèle au plan d'image de l'objet.

**13.** Procédé d'enregistrement d'une image d'un objet, comprenant les étapes consistant à :

- former l'image sur un capteur d'image (10) comprenant un ensemble d'éléments sensibles à la lumière avec un moyen de formation d'image,
- déplacer le capteur d'image par rapport à l'image pendant l'enregistrement de l'image,
- sélectionner un déplacement souhaité à partir d'une pluralité de déplacements différents en fonction d'une caractéristique causant un Moiré dans l'objet à imager, et
- contrôler le déplacement du capteur d'image par rapport à l'image conformément à la sélection.

**14.** Procédé selon la revendication 13, dans lequel l'étape de sélection comprend l'étape consistant à sélectionner une amplitude souhaitée du déplacement.

**15.** Procédé selon la revendication 13 ou 14, dans lequel l'étape de sélection comprend l'étape consistant à sélectionner une fréquence souhaitée du déplacement.

**16.** Procédé selon l'une quelconque des revendications 13 à 15, dans lequel le déplacement est un déplacement unidimensionnel.

**17.** Procédé selon l'une quelconque des revendications 13 à 15, dans lequel le déplacement est un déplacement bidimensionnel.

**18.** Procédé selon l'une quelconque des revendications 13 à 17, dans lequel l'étape de déplacement comprend l'étape consistant à déplacer une partie mobile (46, 48) du moyen de formation d'image (50) .

**19.** Procédé selon l'une quelconque des revendications 13 à 17, dans lequel l'étape de déplacement consiste à déplacer le capteur d'image (10).

# Figure 1

| R | G | R | G | R | G | R | G | R |
|---|---|---|---|---|---|---|---|---|
| G | B | G | B | G | B | G | B | G |
| R | G | R | G | R | G | R | G | R |
| G | B | G | B | G | B | G | B | G |
| R | G | R | G | R | G | R | G | R |
| G | B | G | B | G | B | G | B | G |
| R | G | R | G | R | G | R | G | R |
| G | B | G | B | G | B | G | B | G |
| R | G | R | G | R | G | R | G | R |

# Figure 2

Pattern 1

Pattern 2

1+2

# Figure 3

# Figure 4

# Figure 5

any d:

$x=0$
$y=1$

$x=1$
$y=0$

d=0:

$x=1$
$y=1$

d=T/2:

$x=1$
$y=1$

d=T/4:

$x=1$
$y=1$

$x=1$
$y=0,5$

$x=0,5$
$y=1$

d=T/8:

$x=1$
$y=1$

d=-T/8:

$x=1$
$y=1$

# Figure 6

# Figure 7

## Figure 8

## Figure 9

# Figure 10

| Source | Object |
|--------|--------|

46 48

44 50 10

40 42